# EUROPÄISCHE PATENTSCHRIFT

(11) **EP 1 874 465 B1**
(45) Veröffentlichungstag und Bekanntmachung des Hinweises auf die Patenterteilung: **19.12.2012**
(21) Anmeldenummer: 06753436.2
(22) Anmeldetag: 27.04.2006
(51) Int. Cl.: B01J 35/02, B01J 23/78, C01B 3/40, B01J 19/30

(54) **Katalysatorträger sowie dessen Verwendung für die Dampfreformierung von Kohlenwasserstoffen**
Catalyst support and use thereof for the steam reforming of hydrocarbons
Support de catalyseur et son utilisation pour le réformage à la vapeur des hydrocarbures

(30) Priorität: 27.04.2005 DE 102005019596
(43) Veröffentlichungstag der Anmeldung: 09.01.2008
(73) Patentinhaber: Süd-Chemie IP GmbH & Co. KG, 80333 München (DE)
(72) Erfinder: RINGER, Norbert, 83026 Rosenheim (DE); SELIG, Gerhard, 83104 Tuntenhausen (DE); MÜLLER, Hans-Joachim, 82319 Starnberg (DE)
(74) Vertreter: Dannenberger, Oliver Andre
(86) Internationale Anmeldenummer: PCT/EP2006/003939
(87) Internationale Veröffentlichungsnummer: WO 2006/114320

(56) Entgegenhaltungen:
- WO-A-2004/014549
- GB-A- 2 193 907
- US-A1- 2004 180 786
- DATABASE WPI Section Ch, Week 198330 Derwent Publications Ltd., London, GB; Class E17, AN 1983-721050 XP002358135 -& SU 957 948 A (ZAVELEV E D) 15. September 1982 (1982-09-15)
- DATABASE WPI Section Ch, Week 197727 Derwent Publications Ltd., London, GB; Class H04, AN 1977-48294Y XP002358136 -& SU 526 381 A (SAPLIZHENKO O V) 21. Oktober 1976 (1976-10-21)
- PATENT ABSTRACTS OF JAPAN Bd. 003, Nr. 046 (C-043), 18. April 1979 (1979-04-18) -& JP 54 019487 A (NIPPON STEEL CORP; others: 02), 14. Februar 1979 (1979-02-14)

## Beschreibung

Die Erfindung betrifft einen Katalysatorträger, wie er beispielsweise für die Dampfreformierung von Kohlenwasserstoffen verwendet werden kann.

Um bei heterogen katalysierten Reaktionen in der Gasphase einen möglichst hohen Umsatz und eine möglichst hohe Ausbeute zu erhalten, sollte eine möglichst große Kontaktfläche zwischen Gasphase und Katalysatoroberfläche bereitgestellt werden, sodass ein intensiver Austausch zwischen Katalysator und gasförmigen Reaktionskomponenten ermöglicht wird. So sind für heterogen katalysierte Reaktionen Reaktoren entwickelt worden, in denen der Katalysator als lose Schüttung kleiner Katalysatorkörper bereitgestellt wird. Die Schüttung muss dabei so ausgeführt sein, dass einerseits eine große Oberfläche als Kontaktfläche zwischen festem Katalysator und gasförmigen Reaktanden bereitgestellt wird, andererseits aber auch der Druckabfall über den Reaktor hinweg nicht zu groß wird. Es sinkt sonst der Gasdurchsatz durch den Reaktor bzw. ist eine starke Kompression des Reaktionsgases erforderlich. Der in den Reaktor eingebrachte Katalysator soll in einem möglichst großem Anteil für die katalysierte Reaktion bereitstehen. Die Schüttung des Katalysators sollte daher keine zu hohe Dichte aufweisen, da sonst der Anteil des Katalysators, der in weiter innen liegenden Abschnitten der Katalysatorkörper angeordnet ist, und somit nicht für eine Katalyse der Reaktion zur Verfügung steht, zu stark ansteigt. Die Katalysatorkörper sollten also ein möglichst großes Verhältnis von Oberfläche des Katalysatorkörpers zu dessen Gewicht aufweisen. Schließlich müssen die Katalysatorkörper eine ausreichend hohe mechanische Stabilität aufweisen, sodass sie bei mechanischer Belastung nicht zerbrechen und zu einem feinteiligen Pulver bzw. Granulat zerfallen, welches die Strömungswege innerhalb der Katalysatorpackung verstopft und zu einem Anstieg des Druckabfalls führt. Die Katalysatorkörper müssen schließlich noch so geformt sein, dass sie beim Einfüllen in den Reaktor die gewünschte Schüttung ausbilden, d.h. die Katalysatorkörper dürfen sich beispielsweise nicht verkanten, sodass sich innerhalb des Reaktors keine größeren Hohlräume ausbilden, die nicht mit Katalysator gefüllt sind.

Neben einfachen Kugeln oder Granulaten sind daher eine ganze Reihe von Katalysatorkörpern entwickelt worden, die eine gleichmäßige Schüttung und eine möglichst große Oberfläche bereitstellen. Obwohl bereits eine große Formenvielfalt für Katalysatorkörper existiert ist jedoch noch immer Platz für Weiterentwicklungen.

Mit Katalysatoren bzw. Katalysatorkörpern gefüllte Reaktoren werden meist kontinuierlich über einen längeren Zeitraum von mehreren Monaten bis hin zu mehreren Jahren betrieben, sodass geringe Zugewinne in der Ausbeute bei der Herstellung der gewünschten Verbindungen bereits große wirtschaftliche Auswirkungen auf die Rentabilität der Anlage haben.

Ebenso bedeutet ein, wenn auch geringer Zugewinn in der Stabilität der Katalysatorformkörper meist einen bedeutenden wirtschaftlichen Vorteil, da die Betriebszeit der Anlage verlängert werden kann und weniger Unterbrechungen des Herstellprozesses für eine Erneuerung der Katalysatorpackung erforderlich sind.

In der DE 39 35 073 wird ein Verfahren zur katalytischen Dehydrierung von Kohlenwasserstoffen, insbesondere von Alkylaromaten bei erhöhter Temperatur in Gegenwart von Wasserdampf und Metalloxidkatalysator-Formkörpern beschrieben. Die Formkörper weisen eine zahnradartige Gestalt mit mindestens drei Zähnen auf, wobei die folgenden Abmessungsverhältnisse gelten:
(a) Das Verhältnis Kopfkreisdurchmesser (d₂) : Fußkreisdurchmesser (d₁) beträgt etwa 1,2 bis 2,5 : 1;
(b) Das Verhältnis von Lückenbreite am Zahnfuß (b₁) : Zahnbreite (b₂) an der Krone beträgt 0,1 bis 0,9 : 1;
(c) Die Lückenbreite am Zahnfuß (b₁) beträgt mindestens 0,1 mm.

In der DE 39 34 032 A1 wird ein Wärmeübertragungs- oder Füllkörperelement beschrieben, mit einem sich in Längsrichtung erstreckenden Kernbereich, auf welchem in Längsrichtung verlaufende Vorsprünge mit einem T-förmigen Querschnitt angeordnet sind.

In der DE 31 41 942 A1 werden Katalysatorformkörper mit einer im Wesentlichen zylinderförmigen Gestalt beschrieben, mit mehreren Längsvertiefungen, die sich radial vom Zylinderumfang nach innen erstrecken und dazwischen liegende Erhebungen begrenzen, deren maximale Breite größer ist als diejenige der Vertiefungen.

In der DE 31 18 835 A1 wird eine Katalysatorstruktur zur partiellen Oxidation von n-Butan zur Herstellung von Maleinsäureanhydrid beschrieben. Die Katalysatoren weisen die Form einer Tablette auf, in deren Zentrum ein Loch oder eine Höhlung angeordnet ist.

In der DE 29 14 079 werden Austausch-Schüttkörper mit reaktivem Material beschrieben, die sich insbesondere für die Spurenstoffanreicherung aus großen Wassermassen eignen. Die Schüttkörper weisen eine mechanisch stabile Außenkontur und eine vor mechanischem Zugriff durch Nachbarkörper geschützte flüssigkeitszugängliche reaktive Oberfläche auf.

In der DE 27 19 543 A werden Keramikkörper zur Aufnahme eines Katalysators, insbesondere für die Umformung von Kohlenwasserstoffen, beschrieben. Der Keramikkörper weist die Form eines Rohres auf, in dessen innerem Hohlraum radial von der Längsachse nach außen verlaufende Stege angeordnet sind.

In der DE 24 25 058 werden Füllkörper aus Keramikmaterial beschrieben, welche die Form von Rohrabschnitten aufweisen. Die Rohrabschnitte weisen mehrere, zueinander parallel verlaufende Längskanäle auf. Dabei können mehrere Längskanäle um einen zentralen Längskanal angeordnet sein.

In der 54 95 7948 werden katalysatorkörper für die dampfreformierung beschrieben.

Der Erfindung lag daher die Aufgabe zu Grunde, einen Katalysatorkörper bereitzustellen, welcher die Herstellung einer möglichst homogenen Katalysatorschüttung ermöglicht, wobei eine möglichst große Oberfläche des Katalysatorkörpers bereitgestellt werden soll.

Diese Aufgabe wird mit einem Katalysatorkörper mit den Merkmalen des Patentanspruchs 1 gelöst. Vorteilhafte Weiterbildungen sind Gegenstand der abhängigen Ansprüche.

Erfindungsgemäß wird ein zylinderförmiger Katalysatorkörper bereitgestellt, welcher auf seiner Umfangsfläche parallel zur Längsachse des Katalysatorkörpers verlaufende Rillen sowie zwischen den Rillen verlaufende Stege aufweist.

Durch die auf der Umfangsfläche des Katalysatorkörpers vorgesehenen Rillen und Stege wird die Oberfläche des Katalysatorkörpers vergrößert, sodass bei gleicher Menge an Aktivmasse im Vergleich zu einer reinen Zylinderform auch eine größere Kontaktfläche zwischen Katalysator und gasförmigen Reaktionspartnern bereitgestellt wird. Dadurch lässt sich bei konstanter Katalysatormenge ein höherer Durchsatz der Reaktionspartner durch den Reaktor verwirklichen und als Folge auch eine Steigerung der Ausbeute pro Zeiteinheit. Die Rillen weisen in ihrem Querschnitt die Form eines.Kreissegments auf. Als Querschnitt wird dabei ein Schnitt senkrecht zur Längsachse des Katalysatorkörpers betrachtet. Durch die bogenförmige Ausgestaltung der Rillen werden Spannungskerben vermieden, die zu einem Bruch des Katalysatorkörpers führen können. Zwischen den Rillen verlaufen Stege, deren Querschnitt die Form eines Kreissegments aufweist. Durch die bogenförmige Ausgestaltung des Querschnitts der Stegoberfläche werden Kanten vermieden, die beispielsweise beim Einfüllen der Katalysatorkörper in den Reaktor brechen können. Bei dem erfindungsgemäßen Katalysatorkörper ist der Radius des Kreissegments der Stege größer gewählt ist als der Radius des Kreissegments der Rillen gewählt. Die Katalysatorkörper können sich daher nicht in der Weise zusammenlagern, dass ein Steg eines Katalysatorkörpers in der Rille eines anderen Katalysatorkörpers zur Anlage kommt, wobei die korrespondierenden Flächen von Steg und Rille plan aneinander anliegen und eine Verringerung der zur Verfügung stehenden Katalysatoroberfläche bewirken. Ist der Radius des Querschnitts der Stege kleiner als der Radius der Rillen, können die Stege zwar in den Rillen zur Anlage kommen, die Flächen von Rille und Steg liegen jedoch nicht plan aufeinander. In der Ausführungsform ist der Radius des Kreissegments der Stege größer als der Radius des Kreissegments der Rillen. Auf diese Weise können die Stege nicht in die Rillen eindringen und dort zur Anlage gelangen. Der Radius der Kreissegmente der Rillen ist bevorzugt zwischen 1 und 5 mm, insbesondere bevorzugt zwischen 2 und 3 mm gewählt. Der Radius der Kreissegmente der Stege beträgt vorzugsweise zwischen 2 und 5 mm, insbesondere bevorzugt zwischen 3 und 4 mm.

Der Katalysatorkörper weist einen zentralen Kanal auf, welcher sich entlang der Längsachse des Katalysatorkörpers erstreckt. Auf diese Weise kann die Oberfläche des Katalysatorkörpers weiter vergrößert und die Dichte bzw. das Gewicht des Katalysatorkörpers weiter erniedrigt werden, ohne dass eine wesentliche Einbuße bei der Stabilität des Katalysatorkörpers hingenommen werden muss.

Der zentrale Kanal weist vorzugsweise einen kreisförmigen Querschnitt auf.

Der Katalysatorkörper weist Nebenkanäle auf, die parallel zur Längsachse, jedoch exzentrisch zu dieser verlaufen. Durch die Nebenkanäle wird eine weitere Vergrößerung der Oberfläche des Katalysatorkörpers erreicht und die Menge an aktivem Material, die zur Erzeugung des Katalysatorkörpers benötigt wird, weiter verringert.

Die Nebenkanäle weisen vorzugsweise einen kreisförmigen Querschnitt auf.

Die Anzahl der Nebenkanäle ist vorzugsweise größer als 7, insbesondere bevorzugt größer als 8 gewählt und ist besonders bevorzugt gleich 9. Die Anzahl der Nebenkanäle wird vorzugsweise möglichst hoch gewählt, um die Oberfläche des Katalysatorkörpers möglichst groß ausgestalten zu können und den durch den Katalysatorkörper verursachten Druckabfall möglichst gering zu halten. Andererseits muss ein Kompromiss mit der Stabilität des Katalysatorkörpers gefunden werden. Die Stege zwischen den Nebenkanälen bzw. zwischen dem zentralen Kanal und den Nebenkanälen müssen noch ausreichend breit sein, um die durch die Schüttung verursachte Last auf den einzelnen Katalysatorträger noch aufnehmen zu können.

Die Längsachsen der Nebenkanäle sind auf einem Kreis bzw. einer Zylinderfläche angeordnet, dessen Mittelpunkt bzw. deren Achse von der Längsachse des Katalysatorkörpers gebildet ist. Der Katalysatorträger erhält dadurch eine im wesentlichen rotationssymmetrische Gestalt, wodurch ein höherer Grad der Freiheit in der Anordnung des Katalysatorkörpers in der Packung des Reaktors erreicht wird, d.h. die Homogenität der Packung des Katalysatorkörpers erhöht sich, wodurch ein gleichmäßiger Gasfluss durch die Reaktorpackung erreicht wird. Der Durchmesser des Kreises, auf welchem die Mittelpunkte bzw. Längsachsen der Nebenkanäle angeordnet sind, beträgt vorzugsweise zwischen 10 und 20 mm, bevorzugt zwischen 12 und 16 mm.

Der Mittelpunkt des Kreissegments der Stege ist auf der Längsachse des entsprechenden Nebenkanals angeordnet. Dadurch erhält der Steg, welcher die Nebenkanäle zur Außenseite des Katalysatorkörpers hin begrenzt, eine gleichmäßige Dicke, und die Kräfte, welche auf die Außenseite des Katalysatorkörpers wirken, können durch die Bogenform des Steges in den Katalysatorkörper eingeleitet werden, wodurch sich dessen Stabilität erhöht. Die Bogenform des Steges wird bei einer Ansicht auf die Stirnfläche des Katalysatorkörpers sichtbar.

Die im Katalysatorkörper angeordneten Nebenkanäle weisen bevorzugt einen geringeren Durchmesser auf als der zentrale Kanal. Der Durchmesser des zentralen Kanals kann relativ groß gewählt werden, um dadurch die Oberfläche des Katalysatorkörpers zu vergrößern und den durch den einzelnen Katalysatorkörper verursachten Druckabfall zu verkleinern. Der Durchmesser des zentralen Kanals wird dabei so gewählt, dass die zwischen zentralem Kanal und Nebenkanälen angeordneten Stege eine ausreichende Dicke aufweisen um die erforderliche Stabilität des Katalysatorkörpers zu gewährleisten.

Der Durchmesser des zentralen Kanals ist vorzugsweise zwischen 4 und 8 mm gewählt. Der Durchmesser der Nebenkanäle ist vorzugsweise zwischen 1,5 und 3 mm gewählt. Die Stärke der Stege, welche die Nebenkanäle zur Außenseite des Katalysatorkörpers hin begrenzen bzw. die zwischen den Nebenkanälen oder zwischen den Nebenkanälen und dem zentralen Kanal angeordnet sind, ist vorzugsweise größer als 1 mm, bevorzugt größer als 1,5 mm und insbesondere bevorzugt zwischen 1,6 und 4 mm gewählt.

Um eine möglichst gleichmäßige Schüttung der Katalysatorkörper im Reaktor zu erreichen, wird der erfindungsgemäße Katalysatorkörper bevorzugt so gestaltet, dass seine Ausdehnung in Richtung der Längsachse näherungsweise dem Durchmesser des Katalysatorkörpers senkrecht zur Längsachse entspricht. Vorzugsweise ist das Verhältnis von Durchmesser des Katalysatorkörpers zu seiner Längsausdehnung zwischen 0,9 und 1,5 gewählt. Der Durchmesser des Katalysatorkörpers ist vorzugsweise zwischen 15 mm und 30 mm gewählt, bevorzugt zwischen 18 und 25 mm und beträgt insbesondere bevorzugt etwa 21 mm. Die Ausdehnung des Katalysatorkörpers in Richtung der Längsachse beträgt vorzugsweise zwischen 15 mm und 30 mm, bevorzugt zwischen 18 mm und 25 mm, und beträgt insbesondere bevorzugt etwa 16 mm.

Um eine möglichst lange Lebensdauer der Schüttung der Katalysatorkörper zu erreichen, müssen die Katalysatorkörper eine ausreichend hohe Festigkeit aufweisen. Dies kann zum einen durch den geometrischen Aufbau des Katalysatorkörpers und zum anderen durch die Festigkeit des Materials erreicht werden, aus welchem der Katalysatorkörper hergestellt ist. Vorzugsweise weist der Katalysatorkörper eine Seitendruckfestigkeit von mehr als 700 N auf. Die Seitendruckfestigkeit kann gemessen werden, indem die Kraft bestimmt wird, die mindestens erforderlich ist, um ein Bersten des Katalysatorkörpers zu bewirken, wenn dieser zwischen zwei plane Backen eingespannt wird, wobei die planen Flächen der Backen parallel zur Längsachse des Katalysatorkörpers angeordnet sind.

Der Katalysatorkörper eignet sich für eine Verwendung bei der Dampfreformierung von Kohlenwasserstoffen. Bei einer Ausführung als Katalysator für die Dampfreformierung von Kohlenwasserstoffen ist der Katalysatorkörper vorzugsweise im Wesentlichen aufgebaut aus, jeweils berechnet als Metalloxid:
- NiO 10 - 20 Gew.-%
- CaO 10 - 20 Gew.-%
- Al₂O₃ ad 100 Gew.-%.

Der Katalysatorkörper kann geringe Mengen an Verunreinigungen enthalten. Vorzugsweise beträgt der Anteil an Na sowie SiO₂ am Katalysatorkörper weniger als 0,05 Gew.-%.

Der erfindungsgemäße Katalysatorkörper lässt sich mit üblichen Verfahren herstellen, beispielsweise durch Extrudieren. Die Bestandteile des Katalysatorkörpers werden dabei zu einem feinen Pulver vermahlen, dass vorzugsweise eine mittlere Korngröße D₅₀ von 5 bis 300 µm aufweist, ggf. mit einem Gleitmittel, wie Graphit oder einer langkettigen Fettsäure vermischt und dann, ggf. nach Anmischen mit Wasser, in die gewünschte Form überführt.

Ein weiterer Gegenstand der Erfindung ist die Verwendung des oben beschriebenen Katalysatorkörpers für die Dampfreformierung von Kohlenwasserstoffen.

Die Erfindung wird im weiteren unter Bezugnahme auf eine beigefügte Figur näher erläutert. Diese zeigt:

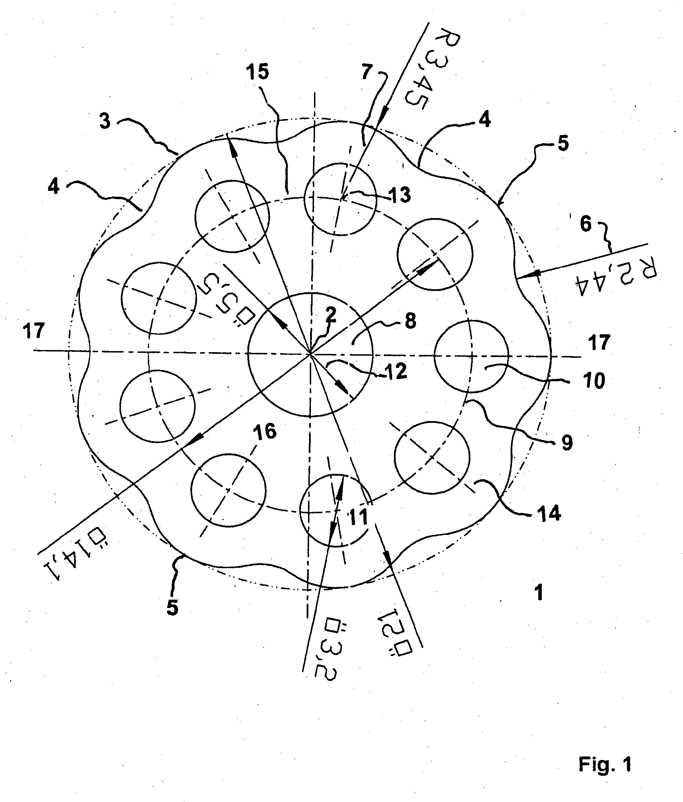

- Fig. 1:: einen Querschnitt durch eine Ausführungsform des erfindungsgemäßen Katalysatorkörpers.

Fig. 1 zeigt einen Querschnitt durch den erfindungsgemäßen Katalysatorkörper 1, senkrecht zur Längsachse 2 des Katalysatorkörpers 1 bzw. auf die Stirnfläche des erfindungsgemäßen Katalysatorkörpers. Die äußere Umfangsfläche 3 des Katalysatorkörpers 1 ist zusammengesetzt aus einer Abfolge von Rillen 4 und Stegen 5. Die Rillen 4 und Stege 5 bilden bei einer Ansicht auf den Querschnitt jeweils Kreissegmente aus, wobei der Radius 6 der Kreissegmente der Rillen 4 kleiner gewählt ist als der Radius 7 der Kreissegmente der Stege 5. Bei nebeneinander angeordneten Katalysatorkörpern können daher die Stege 5 des einen Katalysatorkörpers 1 nicht plan an der Oberfläche der Rillen 4 des anderen Katalysatorkörpers anliegen. Entlang der Längsachse 2 des Katalysatorkörpers 1 verläuft ein zentraler Kanal 8. Um den zentralen Kanal 8 sind auf einem Kreis 9, dessen Mittelpunkt mit der Längsachse 2 des Katalysatorkörpers 1 zusammenfällt, in regelmäßigem Abstand neun Nebenkanäle 10 angeordnet, welche parallel zum zentralen Kanal 8 verlaufen. Der Durchmesser 11 der Nebenkanäle 10 ist geringer als der Durchmesser 12 des zentralen Kanals 8. Die Längsachse 13 der Nebenkanäle 10 fällt dabei mit der Längsachse bzw. dem Mittelpunkt der Kreissegmente der zugeordneten Stege 5 zusammen, sodass die Nebenkanäle zur Außenseite des Katalysatorkörpers 1 hin von einem bogenförmigen Steg 14 begrenzt werden, der eine im Wesentlichen konstante Dicke aufweist. Die Dicke der zwischen zwei Nebenkanälen 10 angeordneten Stege 15 entspricht dabei in etwa der Dicke der bogenförmigen Stege 14. Bei der gezeigten Ausführungsform ist die Dicke der Stege 16, welche zwischen zentralem Kanal 8 und Nebenkanälen 10 angeordnet sind, größer gewählt als die Dicke der Stege 15, welche zwischen zwei Nebenkanälen 10 angeordnet sind. Der Durchmesser 17 des Katalysatorkörpers 1 entspricht in etwa der Längsausdehnung des Katalysatorkörpers in Richtung der Längsachse 2.

### Bezugszeichenliste

- 1: Katalysatorkörper
- 2: Längsachse
- 3: Umfangsfläche
- 4: Rille
- 5: Steg
- 6: Radius
- 7: Radius
- 8: zentraler Kanal
- 9: Kreis
- 10: Nebenkanal
- 11: Durchmesser
- 12: Durchmesser
- 13: Längsachse
- 14: Steg
- 15: Steg
- 16: Steg
- 17: Durchmesser

## Patentansprüche

1. Zylinderförmiger Katalysatorkörper, welcher auf seiner Umfangsfläche (3) parallel zur Längsachse (2) des Katalysatorkörpers (1) verlaufende Rillen (4) sowie zwischen den Rillen (4) verlaufende Stege (5) aufweist, wobei die Rillen (4) und die zwischen den Rillen (4) verlaufenden Stege (5) in ihrem Querschnitt die Form eines Kreissegments aufweisen, wobei der Radius (7) des Kreissegments der Stege (5) größer gewählt ist als der Radius (6) des Kreissegments der Rillen (4)und wobei weiter der Katalysatorkörper (1) einen zentralen Kanal (8) aufweist, welcher sich entlang der Längsachse (2) des Katalysatorkörpers (1) erstreckt und wobei der Katalysatorkörper (1) Nebenkanäle (10) aufweist, die parallel zur Längsachse (2) des Katalysatorkörpers (1), jedoch exzentrisch zu dieser verlaufen, wobei die Längsachsen (13) der Nebenkanäle (10) auf einem Kreis (9) angeordnet sind, dessen Mittelpunkt von der Längsachse (2) des Katalysatorkörpers (1) gebildet ist **dadurch gekennzeichnet, dass** der Mittelpunkt des Kreissegments der Stege (5) auf der Längsachse (13) des Nebenkanals (10) angeordnet ist.

2. Katalysatorkörper nach Anspruch 1 **dadurch gekennzeichnet, dass** der zentrale Kanal (8) einen kreisförmigen Querschnitt aufweist.

3. Katalysatorkörper nach Anspruch 1 oder 2 **dadurch gekennzeichnet, dass** die Nebenkanäle (10) einen kreisförmigen Querschnitt aufweisen.

4. Katalysatorkörper nach einem der Ansprüche 1 bis 3 **dadurch gekennzeichnet, dass** die Anzahl der Nebenkanäle (10) größer als 7, vorzugsweise größer als 8, insbesondere bevorzugt gleich 9 ist.

5. Katalysatorkörper nach einem der Ansprüche 1 bis 4 **dadurch gekennzeichnet, dass** die Nebenkanäle (10) einen geringeren Durchmesser aufweisen als der zentrale Kanal (8).

6. Katalysatorkörper nach einem der Ansprüche 1 bis 5 **dadurch gekennzeichnet, dass** der Durchmesser des zentralen Kanals (8) zwischen 4 und 8 mm gewählt ist.

7. Katalysatorkörper nach einem der Ansprüche 1 bis 6 **dadurch gekennzeichnet, dass** der Durchmesser der Nebenkanäle (10) zwischen 1,5 und 3 mm gewählt ist.

8. Katalysatorkörper nach einem der vorhergehenden Ansprüche **dadurch gekennzeichnet, dass** das Verhältnis von Durchmesser (17) des Katalysatorkörpers zu seiner Längsausdehnung zwischen 0,9 und 1,5 gewählt ist.

9. Katalysatorkörper nach einem der vorhergehenden Ansprüche **dadurch gekennzeichnet, dass** der Katalysatorkörper (1) eine Seitendruckfestigkeit von mehr als 700 N aufweist.

10. Katalysatorkörper nach einem der vorhergehenden Ansprüche **dadurch gekennzeichnet, dass** der Katalysatorkörper (1) im Wesentlichen aufgebaut ist, jeweils berechnet als Metalloxid:
- NiO 10 - 20 Gew.-%
- CaO 10 - 20 Gew.-%
- Al₂O₃ ad 100 Gew.-%.

11. Katalysatorkörper nach einem der vorhergehenden Ansprüche **dadurch gekennzeichnet, dass** der Anteil an Na sowie SiO₂ am Katalysatorkörper (1) weniger als 0,05 Gew.-% beträgt.

12. Verwendung eines Katalysatorkörpers nach Anspruch 10 oder 11 für die Dampfreformierung von Kohlenwasserstoffen.

## Claims

1. Cylindrical catalyst body, which on its circumferential surface (3) has grooves (4) running parallel to the longitudinal axis (2) of the catalyst body (1) and webs (5) running between the grooves (4), wherein the grooves (4) and the webs (5) running between the grooves (4) are in their cross section in the form of a segment of a circle, the selected radius (7) of the segment of a circle of the webs (5) being larger than the radius (6) of the segment of a circle of the grooves (4), and, further, the catalyst body (1) having a central duct (8) which extends along the longitudinal axis (2) of the catalyst body (1), and the catalyst body (1) having secondary ducts (10) which run parallel to the longitudinal axis (2) of the catalyst body (1), but eccentrically with respect to this, the longitudinal axes (13) of the secondary ducts (10) being arranged on a circle (9), the centre point of which is formed by the longitudinal axis (2) of the catalyst body (1), **characterized in that** the centre point of the segment of a circle of the webs (5) being arranged on the longitudinal axis (13) of the secondary duct (10).

2. Catalyst body according to Claim 1, **characterized in that** the central duct (8) has a circular cross section.

3. Catalyst body according to Claim 1 or 2, **characterized in that** the secondary ducts (10) have a circular cross section.

4. Catalyst body according to one of Claims 1 to 3, **characterized in that** the number of secondary ducts (10) is greater than 7, preferably greater than 8, in particular preferably equal to 9.

5. Catalyst body according to one of Claims 1 to 4, **characterized in that** the secondary ducts (10) have a smaller diameter than the central duct (8).

6. Catalyst body according to one of Claims 1 to 5, **characterized in that** the selected diameter of the central duct (8) is between 4 and 8 mm.

7. Catalyst body according to one of Claims 1 to 6, **characterized in that** the selected diameter of the secondary ducts (10) is between 1.5 and 3 mm.

8. Catalyst body according to one of the preceding claims, **characterized in that** the selected ratio of the diameter (17) of the catalyst body to its longitudinal extent is between 0.9 and 1.5.

9. Catalyst body according to one of the preceding claims, **characterized in that** the catalyst body (1) has a lateral pressure resistance of more than 700 N.

10. Catalyst body according to one of the preceding claims, **characterized in that** the catalyst body (1) is essentially constructed from, in each case calculated as a metal oxide:
- NiO 10-20% by weight
- CaO 10-20% by weight
- Al₂O₃ up to 100% by weight.

11. Catalyst body according to one of the preceding claims, **characterized in that** the fraction of Na and of SiO₂ in the catalyst body (1) is less than 0.05% by weight.

12. Use of the catalyst body according to Claim 10 or 11 for the steam reforming of hydrocarbons.

## Revendications

1. Corps de catalyseur de forme cylindrique qui présente à sa surface circonférentielle (3) des rainures (4) ainsi que des bosses (5) interposées entre les rainures (4) qui sont parallèles à l'axe longitudinal (2) du corps de catalyseur (1), où les rainures (4) et les bosses (5) interposées entre les rainures (4) présentent en coupe la forme d'un segment circulaire, où le rayon (7) du segment circulaire des bosses (5) est choisi supérieur au rayon (6) du segment circulaire des rainures (4) et où en outre le corps de catalyseur (1) présente un canal central (8) qui s'étend le long de l'axe longitudinal (2) du corps de catalyseur (1) et où le corps de catalyseur (1) présente des canaux secondaires (10) qui sont parallèles à l'axe longitudinal (2) du corps de catalyseur (1) mais excentrés par rapport à cet axe, où les axes longitudinaux (13) des canaux secondaires (10) sont alignés sur un cercle (9) ayant comme axe, l'axe longitudinal (2) du corps de catalyseur (1), **caractérisé en ce que** l'axe du segment circulaire des bosses (5) est aligné sur l'axe longitudinal (13) du canal secondaire (10).

2. Corps de catalyseur selon la revendication 1 **caractérisé en ce que** le canal central (8) présente en coupe une forme circulaire.

3. Corps de catalyseur selon la revendication 1 ou 2 **caractérisé en ce que** les canaux secondaires (10) présentent en coupe une forme circulaire.

4. Corps de catalyseur selon l'une des revendications 1 à 3 **caractérisé en ce que** le nombre des canaux secondaires (10) est supérieur à 7, de préférence supérieur à 8, encore plus de préférence est égal à 9.

5. Corps de catalyseur selon l'une des revendications 1 à 4 **caractérisé en ce que** les canaux secondaires (10) présentent un diamètre inférieur à celui du canal central (8).

6. Corps de catalyseur selon l'une des revendications 1 à 5 **caractérisé en ce que** le diamètre du canal central (8) est choisi entre 4 et 8mm.

7. Corps de catalyseur selon l'une des revendications 1 à 6 **caractérisé en ce que** le diamètre des canaux secondaires (10) est choisi entre 1,5 et 3mm.

8. Corps de catalyseur selon l'une quelconque des revendications précédentes, **caractérisé en ce que** le rapport entre le diamètre (17) du corps de catalyseur et son extension longitudinale est choisi entre 0,9 et 1, 5.

9. Corps de catalyseur selon l'une quelconque des revendications précédentes, **caractérisé en ce que** le corps de catalyseur (1) présente une résistance aux pressions latérales de plus de 700 N.

10. Corps de catalyseur selon l'une quelconque des revendications précédentes, **caractérisé en ce que** le corps de catalyseur (1) est essentiellement composé, respectivement exprimé en oxydes métalliques :
- NiO 10 - 20 % en poids
- CaO 10 - 20 % en poids
- Al₂O₃ à concurrence de 100 % en poids

11. Corps de catalyseur selon l'une quelconque des revendications précédentes, **caractérisé en ce que** la proportion de Na ainsi que de SiO₂ dans le corps de catalyseur (1) est inférieure à 0,05 % en poids.

12. Utilisation d'un corps de catalyseur selon la revendication 10 ou 11 pour le vaporeformage des hydrocarbures.
